# EUROPÄISCHE PATENTSCHRIFT

(11) **EP 1 217 413 B1**
(45) Veröffentlichungstag und Bekanntmachung des Hinweises auf die Patenterteilung: **31.01.2007**
(21) Anmeldenummer: 01129057.4
(22) Anmeldetag: 07.12.2001
(51) Int. Cl.: G02B 21/18, G02B 23/10, G02B 27/34

(54) **Optische Betrachtungseinrichtung mit eingespiegeltem optischem Signal**
Optical viewing device with superimposed optical signal
Dispositif optique d'observation avec signal optique superposé

(30) Priorität: 23.12.2000 DE 10064910
(43) Veröffentlichungstag der Anmeldung: 26.06.2002
(73) Patentinhaber: Leica Microsystems AG, 9435 Heerbrugg (CH)
(72) Erfinder: Mannss, Jürgen, 9008 St. Gallen (CH)
(74) Vertreter: Rosenich, Paul

(56) Entgegenhaltungen:
- EP-A- 0 928 981
- WO-A-98/13716
- DE-A- 10 021 063
- US-A- 4 567 478

## Beschreibung

Die Erfindung betrifft eine optische Betrachtungseinrichtung mit einer Einspiegelung von Bilddaten, z.B. ein (Stereo-) Operationsmikroskop.

Das Einblenden mittels Einspiegelvorrichtungen oder Überlagern von Informationen in das Beobachtungsfeld optischer Systeme wird in vielen Bereichen mehr und mehr angewandt, da es für den Anwender zu einem erheblichen Informationsgewinn führt. In klinischen Applikationen geben Einspiegelungen dem Chirurgen die Möglichkeit, weitere visuelle Informationen aufzunehmen, ohne seinen Blickkontakt zum Operationsfeld zu unterbrechen. Typischerweise erfolgt dies durch eine Überlagerung des mikroskopischen Zwischenbildes mit Zusatzinformationen, beispielsweise, mittels Display, Abbildungsoptik und optischem Strahlenteiler.

Bei fast allen Applikationen sind Helligkeit, Kontrast und Auflösung des überlagerten Bildes wichtige Qualitätsmerkmale für eine einwandfreie Funktion. Für eine gute Wahrnehmung der Überlagerung muss das eingespiegelte Bildsignal in der Regel signifikant heller sein als die durch das Okular gesehene optische Abbildung des Objektes.

Bei den heute bekannten Einspiegelvorrichtungen erfolgt die Darstellung einer Bilddaten-Einspiegelung in Form einer Überlagerung bei gleichzeitiger oder abwechselnd alleiniger Darstellung der Bilddaten-Einspiegelung im Beobachtungsfeld eines (Stereo-) Operationsmikroskopes. Dabei wird für das Display für die Einspiegelung in der Regel eine eigene Beleuchtungseinrichtung vorgesehen. Diese ist nur dann regelbar, wenn sie zusätzliche Blenden mit den entsprechenden Steuerungselementen, elektrische Regler oder dergleichen umfasst. Nicht geregelte Einspiegelungshelligkeiten führen zu unbefriedigenden Überlagerungen.

Zur gleichzeitigen Überlagerung der Bilddaten über das Objektbild ist eine sehr viel höhere Lichtmenge notwendig als die an sich schon hohe Lichtmenge für die Objektbeleuchtung.

Zwar ist es aus der EP-0 928 981 bekannt, Umschaltprismen oder Spiegel einzusetzen, um wahlweise Bilddaten einzublenden oder nicht einzublenden. Dies löst allerdings nicht das Helligkeitsproblem, wie es oben angesprochen wurde. Dies gilt auch für die DE 100 21 063, welche zwar offenbart, dass man die vom Objekt reflektierte Strahlung auch zur Beleuchtung eines Auflicht- oder Reflexions-Displays heranziehen kann, aber keine Umschaltmittel gemäss Anspruch 1 vorsieht.

Der Erfinder erkannte, dass die bekannten Systeme nachteilig sind in Bezug auf die folgenden Punkte:
i) Durch die hohe Lichtintensität werden sehr feine Detailunterschiede im Objektbild nicht erkannt, da es zu Streuungen, Reflexionen und damit zur Auslöschung von Bildinformationen kommt.
ii) Wird von einem Betrachter die zur Verfügung stehende Bildinformation direkt, d.h. ohne das vom Objekt kommende Bild betrachtet, so ist die angewandte Lichtmenge in der Regel zu hoch und er wird geblendet beziehungsweise muss die Helligkeit der Beleuchtung für die Einspiegelung manuell nachregulieren.
iii) Der Wechsel zwischen Overlay und ausschließlicher Betrachtung der Bilddaten-Einspiegelung wird in vielen Fällen, bei denen eine Regelung besteht, nur über eine Regelung der lichtstarken Objekt-Hauptbeleuchtung realisiert, was mit den bekannten Nachteilen wie z.B. einer Farbtemperatur-Änderung am Objektbild oder der Einspiegelung verbunden ist.
iv) Alle heute bekannten Verfahren zur Lichtintensitäts-Regelung einer Einspiegelung verwenden eine konstante Intensität über die gesamte Fläche der eingespiegelten Bildinformation.

Der Erfindung liegt somit die Aufgabe zugrunde, eine Verbesserung zu finden, welche die angegebenen Nachteile vermeidet und einen ungestörten, dauernden Blick auf die eingespiegelten Informationen ermöglicht; unabhängig davon, ob der Betrachter ausschließlich das eingespiegelte Bild oder das Overlay betrachtet und wie hell und kontrastreich ein Objekt abgebildet wird.

Gelöst wird diese Aufgabe durch eine Einrichtung mit Umschaltmitteln gemäss Anspruch 1.

Zusätzlich wird unterschieden, ob im Rahmen der vorliegenden Erfindung ein Durchlicht-Display, beispielsweise ein LCD-Display, oder ein Auflicht-Display, beispielsweise ein D-ILA-Display, für die Bilddaten-Einspiegelung verwendet wird.

Ein D-ILA-Display für das Einspiegeln von Bilddaten ist erfindungsgemäß hinsichtlich der besonders guten Lichthelligkeit auch unabhängig von den übrigen als optional angegebenen Merkmalen einsetzbar.

Damit können in folgenden Schritten die nachstehenden Verbesserungen erreicht werden:
a) Durch die zweite Lichtquelle kann die Bilddaten-Einspiegelung bezüglich Intensität und Farbe beliebig eingestellt werden.
b) Durch die Verwendung des Reflexionslichts der Hauptlichtquelle am Objekt wird die Einspiegelungs-Helligkeit automatisch mit der Objekthelligkeit geregelt. Dabei ist gemäß einer besonderen Ausgestaltung der Erfindung die Helligkeit - in Abhängigkeit von der Umgebungs-Helligkeit beziehungsweise dem Kontrast des Objektes - der Bilddaten-Einspiegelung sogar punktuell (pixelweise) angepasst. Damit ergibt sich erstmals eine automatische Regelung der Einspiegelungshelligkeit für jeden Teilbereich des überlagerten Bildes. So wird die Einspiegelung z.B. an einer dunklen Objektstelle das dort überlagerte Bild nur schwach erscheinen.
c) Bei Einsatz eines Auflicht-Displays ist zur linearen Intensitätsveränderung über die gesamte Einspiegelung auch die Verwendung einer Lichtverstärkung möglich.
d) Insgesamt werden durch den Einsatz eines der drei neuen Verfahren Streuungen, Überstrahlungen und Auslöschungen des Objektbildes vermieden.
e) Es entstehen keine relativen Farbtemperatur-Änderungen, weder in der Objektabbildung, noch der Einspiegelung, da auf eine Stromstärken-Regelung der Einspiegelung verzichtet werden kann.
f) Bei Einsatz eines Durchlicht-Displays kann nicht nur die Helligkeit der Einspiegelung der jeweiligen Objekthelligkeit angepasst werden, sondern auch die Farbe, beispielsweise wird für die Einspiegelung die Kontrastfarbe der jeweiligen Objektabbildung verwendet.

Im obigen Text wird zwar auf einen Chirurgen und auf ein Operationsmikroskop beziehungsweise auf ein Operationsfeld Bezug genommen; die Erfindung ist jedoch nicht darauf eingeschränkt, sondern kann auch bei anderen optischen Geräten mit Einspiegelungen verwendet werden, zum Beispiel bei Projektionen mit eingeblendeter Zusatzinformation, Video- und Fotokameras, sowie bei monokularen wie auch binokularen Anwendungen.

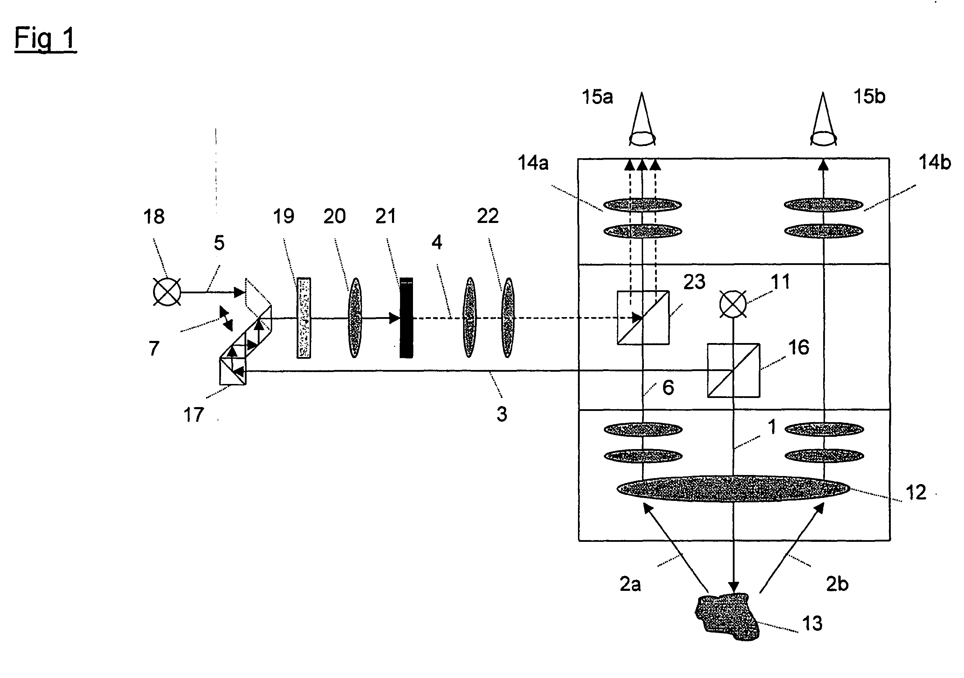

Die Figur 1 zeigt symbolisch einen Hauptbeleuchtungs-Strahlengang 1 und einen Hauptstrahlengang 2, 6 einer Betrachtungseinrichtung sowie einen Beleuchtungs-Strahlengang 3 für eine Einspiegelung, ausgehend von einer Haupt-Lichtquelle 11 über einen Strahlenteiler 16 zu einer Umlenkungs-Einheit 17, beispielsweise einem klappbaren, schwenkbaren oder rotierbaren Prisma 7. Erfindungsgemäß wird eine zusätzliche, in Helligkeit und Farbtemperatur regelbare Einspiegelungs-Beleuchtung 18, ein Durchlicht-Display 21 und der daraus resultierende Einspiegelung-Strahlengang 4 dargestellt, welcher wiederum über einen Strahlenteiler 23 in den Hauptstrahlengang zur Beobachtung eingeblendet wird. Die Okularoptik 14 fokussiert sowohl die Einspiegelung wie auch das Objekt-Abbild auf das Auge des Betrachters 15. Für die Beleuchtung des Displays 21 kann somit wahlweise das Licht der Haupt-Lichtquelle 11 oder das Licht der Einspiegelungs-Beleuchtung 18 verwendet werden. Gemäß der Erfindung wird ein Schaltelement eingesetzt, beispielsweise ein Prisma 17, das ohne Bewegung der Lichtquellen eine Auswahl aus zwei Möglichkeiten schafft.

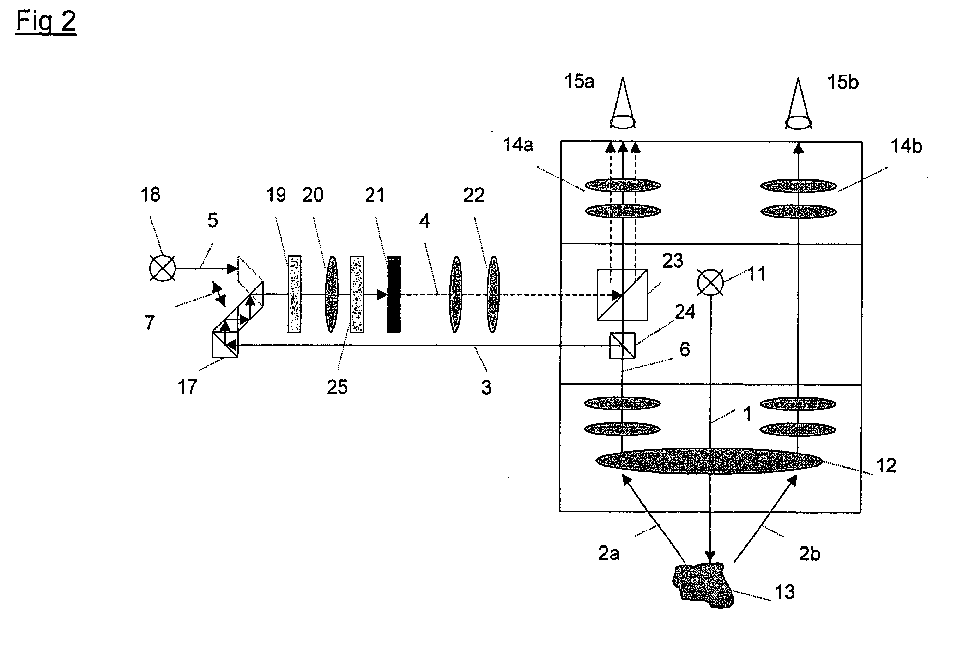

Die Figur 2 zeigt erfindungsgemäß die Verwendung des am Objekt reflektierten Lichtes 2, 6 als Beleuchtung für das Durchlicht-Display 21, welches über einen Strahlenteiler 24 in einen Beleuchtungs-Strahlengang 3 für die Einspiegelung und den Betrachter-Strahlengang 6 aufgeteilt wird. Gemäß einer besonderen Ausgestaltung der Erfindung ist dann das Bild des Objektes 13 zumindest annähernd am Display 21 abgebildet, um die Display-Beleuchtung in ihrer Pixel-Helligkeit zu optimieren.

Die Funktionsweise ist nun folgende:

Ein Teil des von der Hauptlichtquelle 11 ausgehenden Lichtes wird über den Strahlenteiler 16 auf die klappbare Umlenkeinheit 17 - beispielsweise ein Prisma, Spiegel oder dergleichen - auf das Durchlicht-Display 21 umgelenkt.

Das Display 21 entstehende Bild wird über einen Strahlenteiler dem Hauptstrahlengang 6 überlagert. Erfindungsgemäß kann nun zur Beleuchtung des Displays 21 eine zweite, eigens für die Einspiegelung zu verwendende Lichtquelle 18 über einen Beleuchtungs-Strahlengang 5 zur Beleuchtung des Displays verwendet werden, was eine von der Haupt-Lichtquelle 11 unabhängige Helligkeits- und/oder Farbtemperatur-Regelung für die Einspiegelung ermöglicht.

Wie aus Fig. 2 hervorgeht, wird anstelle der Haupt-Lichtquelle 11 für die Display-Beleuchtung das am Objekt 13 reflektierte Licht 2, 6 verwendet, welches durch ein Teilerprisma 24 auf die Umlenkeinheit 17 aufgeteilt wird. Mittels eines Shutters 19 kann die Grundhelligkeit reduziert, mittels einer Streu-Einheit 25 - beispielsweise einer Streuscheibe - die Abbildungsschärfe der Einspiegelung reduziert werden. Mittels dieser Anordnung kann erfindungsgemäß auf Regelungen für die Helligkeit von Teilbereichen der Einspiegelung verzichtet werden, da das am Objekt reflektierte Licht diese Funktion übernimmt. Kombinationen von reflektiertem Licht und zusätzlicher Lichtquelle 18 liegen als Varianten im Rahmen der Erfindung.

### Bezugszeichenliste

- 1: Hauptbeleuchtungs-Strahlengang
- 2: Objekt-Strahlengang
- 3: Beleuchtungs-Strahlengang Haupt-Lichtquelle zur Einspiegelung
- 4: Einspiegelungs-Strahlengang
- 5: Strahlengang zusätzliche Einspiegelungs-Lichtquelle
- 6: Haupt-Strahlengang
- 7: Umschaltpfeil

- 11: Haupt-Lichtquelle
- 12: Hauptobjektiv
- 13: Objekt
- 14: Okular-Optik
- 15: Betrachter
- 16: Beleuchtungs-Strahlenteiler Haupt-Lichtquelle
- 17: Umlenkungs-Einheit (klappbar), z.B. Prisma oder Spiegel
- 18: Einspiegelungs-Lichtquelle, z.B. (LED's)
- 19: Abblend-Shutter (Blende)

- 20: Display-Optik
- 21: Durchlicht-Display (z.B. LCD)
- 22: Einspiegelungs-Optik
- 23: Strahlenteiler zur Einblendung der Einspiegelung
- 24: Beleuchtungs-Strahlenteiler reflektiertes Objektlicht
- 25: Streu-Element (z.B. Streuscheibe)

- 32: Reflexions-Display (z.B. D-ILA-Display)

## Patentansprüche

1. Einrichtung zur Helligkeitssteuerung eines einer Objektabbildung überlagerten optischen Signals, beispielsweise in einem Mikroskop, mit einem Hauptstrahlengang (1, 2, 6), einem Hauptobjektiv (12) und einer Hauptlichtquelle (11), bei dem die Einrichtung ein Auflicht- oder Durchlicht- Display zur Darstellung eines das optische Signal bildenden Bildes und einen Strahlenteiler (23) zur Einspiegelung von Bilddaten in den Hauptstrahlengang (1, 2, 6) aufweist, **dadurch gekennzeichnet, dass** Umschaltmittel (17) vorgesehen sind, durch welche die Beleuchtung der Einspiegelung wahlweise über einen von mindestens zwei der drei folgenden Wege erzielbar ist:
a) über die Hauptlichtquelle und einen Strahlenteiler (16) im Beleuchtungsstrahlengang (1);
b) über das vom Objekt (13) reflektierte Licht (2) und einen Strahlenteiler (24) im Objektstrahlengang (2);
c) durch eine zweite, in Abhängigkeit von der Hauptlichtquelle (11) regelbare Lichtquelle (18).

2. Einrichtung nach Anspruch 1, **dadurch gekennzeichnet, dass** als Umschaltmittel eine Umlenkungseinheit (17), wie Prisma oder Spiegel, vorgesehen ist.

3. Einrichtung nach einem der vorhergehenden Ansprüche, **dadurch gekennzeichnet, dass** der Strahlengang der Hauptlichtquelle (11) mittels eines Strahlenteilers in einen Einspiegelungs- (3) und einen Objektbeleuchtungs-Strahlengang (1) aufgeteilt ist.

4. Einrichtung nach einem der vorhergehenden Ansprüche, **dadurch gekennzeichnet, dass** ein Weg nach Merkmal c) vorgesehen ist, wobei die Helligkeit der Einspiegelungs-Lichtquelle (18) elektronisch geregelt ist, und deren Lichtwellenlänge einstellbar ist.

5. Einrichtung nach einem der vorhergehenden Ansprüche, **dadurch gekennzeichnet, dass** die Intensität des reflektierten Objekt-Lichts verstärkbar ist, insbesondere über eine zusätzliche Lichtquelle oder über eine elektronisch geregelte Restlicht-Verstärkung.

6. Einrichtung nach einem der vorhergehenden Ansprüche, **dadurch gekennzeichnet, dass** für die Einspiegelung anstelle eines Durchlicht-Displays (21) ein Reflexions-Display oder ein Auflicht-Display, beispielsweise ein D-ILA-Display vorgesehen ist.

7. Einrichtung nach einem der vorhergehenden Ansprüche, **dadurch gekennzeichnet, dass** ein - vorzugsweise regelbarer - Teil des reflektierten Objektlichts über einen eigenen Strahlengang (3) auf das Durchlicht-, resp. Auflicht-Display lenkbar und das Objekt darauf - gegebenenfalls unscharf - abbildbar ist.

8. Einrichtung nach Anspruch 7, **dadurch gekennzeichnet, dass** die Objekt-Abbildung auf dem Display einstellbar ist und / oder dass auf der dem Objekt zugewandten Seite des Durchlicht- Displays eine Streuscheibe (25) angeordnet ist.

9. Einrichtung nach Anspruch 7 oder 8, **dadurch gekennzeichnet, dass** eine zusätzliche Lichtquelle (18) in den Display-Beleuchtungs Strahlengang einblendbar ist.

## Claims

1. Device for controlling the brightness of an optical signal superimposed onto an object image, for example in a microscope, with a main beam path (1, 2, 6), a main objective (12) and a main light source (11) in which the device has an incident-light display or a transmitted-light display for depicting an image forming the optical signal and a beam splitter (23) for reflecting image data into the main beam path (1, 2, 6), **characterized in that** switching means (17) are provided which can achieve illumination of the input reflection optionally in one of at least two of the three following ways:
a) via the main light source and a beam splitter (16) in the illumination beam path (1) ;
b) via the light (2) reflected by the object (13) and a beam splitter (24) in the object beam path (2); and
c) via a second light source (18) which can be adjusted as a function of the main light source (11).

2. Device according to Claim 1, **characterized in that** a deflection unit (17), such as a prism or mirror, is provided as switching means.

3. Device according to one of the preceding claims, **characterized in that** the beam path of the main light source (11) is split by means of a beam splitter into an input reflection beam path (3) and an object-illumination beam path (1).

4. Device according to one of the preceding claims, **characterized in that** a way as per item c) is provided in which the brightness of the input reflection light source (18) is electronically adjusted and its optical wavelength can be set.

5. Device according to one of the preceding claims, **characterized in that** the intensity of the reflected object light can be amplified, in particular via an additional light source or by means of an electronically adjustable residual-light amplification.

6. Device according to one of the preceding claims, **characterized in that** a reflection display or an incident-light display, such as a D-ILA display, is provided in place of a transmitted-light display (21) for the input reflection.

7. Device according to one of the preceding claims, **characterized in that** a - preferably adjustable - portion of the reflected object light can be directed by means of a dedicated beam path (3) onto the transmitted-light display or incident-light display, respectively, and the object can be imaged thereon, where applicable in a blurred fashion.

8. Device according to Claim 7, **characterized in that** it is possible to set the object image on the display and/or **in that** a diffuser disc (25) is arranged on the transmitted-light display side facing the object.

9. Device according to Claim 7 or 8, **characterized, in that** an additional light source (18) can be inserted into the display-illumination beam path.

## Revendications

1. Dispositif de contrôle de la luminosité d'un signal optique superposé à une représentation d'un objet, par exemple dans un microscope, avec une trajectoire principale des rayons (1, 2, 6), un objectif principal (12) et une source principale de lumière (11), dans lequel le dispositif possède un affichage par lumière réfléchie ou par transparence pour la représentation d'une image constituant le signal optique et un séparateur de faisceau (23) pour l'injection de données d'images dans la trajectoire principale des rayons (1, 2, 6), **caractérisé en ce qu'**on a prévu des moyens de commutation (17) permettant d'obtenir l'éclairage de l'injection au choix par un, parmi au moins deux des trois chemins suivants :
a) par la source principale de lumière et un séparateur de faisceau (16) dans la trajectoire des rayons d'éclairage (1) ;
b) par la lumière réfléchie (2) par l'objet (13) et un séparateur de faisceau (24) dans la trajectoire des rayons de l'objet (2) ;
c) par une deuxième source de lumière réglable (18) en fonction de la source principale de lumière (11).

2. Dispositif selon la revendication 1, **caractérisé en ce qu'**on a prévu une unité de déviation (17) un prisme ou un miroir comme moyen de commutation.

3. Dispositif selon une des revendications précédentes, **caractérisé en ce que** la trajectoire des rayons de la source principale de lumière (11) est séparée au moyen d'un séparateur de faisceau en une trajectoire de rayons pour l'injection (3) et une trajectoire de rayons pour l'éclairage de l'objet (1).

4. Dispositif selon une des revendications précédentes, **caractérisé en ce qu'**il est prévu un chemin selon la caractéristique c), dans lequel la luminosité de la source de lumière pour l'injection (18) est régulée électroniquement et qu'on peut régler sa longueur d'onde.

5. Dispositif selon une des revendications précédentes, **caractérisé en ce que** l'intensité de la lumière réfléchie par l'objet peut être renforcée, notamment au moyen d'une source de lumière supplémentaire ou au moyen d'une amplification de la lumière résiduelle régulée électroniquement.

6. Dispositif selon une des revendications précédentes, **caractérisé en ce que** pour l'injection, il est prévu un affichage par réflexion ou un affichage par lumière incidente, par exemple un affichage D-ILA, à la place d'un affichage par transparence (21).

7. Dispositif selon une des revendications précédentes, **caractérisé en ce qu'**une partie de préférence réglable de la lumière réfléchie par l'objet peut être déviée à travers une trajectoire de rayons propre (3) sur l'affichage par transparence respectivement sur l'affichage par réflexion et ainsi l'objet peut être représenté, le cas échéant flou.

8. Dispositif selon la revendication 7, **caractérisé en ce que** la représentation de l'objet sur l'affichage peut être réglée et/ou **en ce qu'**un écran diffusant (25) peut être disposé sur la face de l'affichage par transparence orientée vers l'objet.

9. Dispositif selon la revendication 7 ou 8, **caractérisé en ce qu'**une source de lumière supplémentaire (18) peut être incrustée dans la trajectoire des rayons d'éclairage de l'affichage.
